# EUROPÄISCHE PATENTSCHRIFT

(11) **EP 1 343 987 B1**
(45) Veröffentlichungstag und Bekanntmachung des Hinweises auf die Patenterteilung: **22.12.2004**
(21) Anmeldenummer: 01271820.1
(22) Anmeldetag: 24.10.2001
(51) Int. Cl.: F16H 45/02, F16H 41/30

(54) **DREHMOMENTWANDLER**
TORQUE CONVERTER
CONVERTISSEUR DE COUPLE

(30) Priorität: 22.12.2000 DE 10064682
(43) Veröffentlichungstag der Anmeldung: 17.09.2003
(73) Patentinhaber: ZF Sachs AG, 97424 Schweinfurt (DE)
(72) Erfinder: SCHMID, Herbert, 97702 Münnerstadt (DE)
(86) Internationale Anmeldenummer: PCT/EP2001/012256
(87) Internationale Veröffentlichungsnummer: WO 2002/052175

(56) Entgegenhaltungen:
- FR-A- 2 556 807
- US-A- 5 215 173
- US-A- 5 950 483

## Beschreibung

### [Technisches Gebiet]

Die vorliegende Erfindung betrifft einen Drehmomentwandler mit einem Pumpenrad, einem vom Pumpenrad antreibbaren Turbinenrad und einem Leitrad, wobei das Turbinenrad mit einer Getriebeeingangswelle drehfest verbunden ist, wobei die Getriebeeingangswelle einen Axialkanal mit einem Anfangs- und einem Ehdbereich für eine Hydraulikflüssigkeit bildet.

### [Stand der Technik]

Ein derartiger Drehmomentwandler ist zum Beispiel aus der DE 41 21 586 A1 oder der DE 195 40 294 A1 bekannt.

Bei Drehmomentwandlem ist der Axialkanal in der Regel als Mittenbohrung ausgebildet. Zum Verbinden der Mittenbohrung mit einer Speiseöffnung sind im Anfangsbereich in die Getriebeeingangswelle Radialbohrungen eingebracht, über welche die Mittenbohrung mit einer Speiseöffnung für die Hydraulikflüssigkeit in Verbindung steht. In der Praxis hat sich herausgestellt, dass in der Getriebeeingangswelle im Einzelfall im Bereich der Radialbohrungen Spannungsrisse entstehen können.

### [Aufgabe der Erfindung]

Die Aufgabe der vorliegenden Erfindung besteht daher darin, den Axialkanal derart auszugestalten, dass in die Getriebeeingangswelle keine Radialbohrungen mehr eingebracht werden müssen.

### [Darstellung der Erfindung]

Die Aufgabe wird dadurch gelöst,
- dass die Getriebeeingangswelle einen Wellenkern und eine den Wellenkem umgebende Wellenhülse aufweist und
- dass der Wellenkern und die Wellenhülse drehfest miteinander verbunden und derart aufeinander abgestimmt sind, dass der Wellenkern in der Wellenhülse radial spielfrei geführt ist und der Wellenkem und die Wellenhülse zwischen sich den Axialkanal bilden.

Durch die erfindungsgemäße Ausgestaltung des Axialkanals wird ferner erreicht, dass die Länge des Axialkanals nach Belieben variiert werden kann. Insbesondere ist es daher möglich, dass das Leitrad, das üblicherweise auf einer Leitradbuchse angeordnet ist, axial zwischen dem Anfangs- und dem Endbereich angeordnet ist.

Wenn das Turbinenrad eine Turbinenradnabe aufweist, die über eine Verzahnung mit zusammenwirkenden Zähnen und Zahnaufnahmen mit dem Wellenkern drehfest verbunden ist, der Endbereich sich bis zur Turbinenradnabe erstreckt und gegenüber dieser flüssigkeitsdicht abgedichtet ist und die Verzahnung derart ausgebildet ist, dass sie mindestens eine Durchtrittsöffnung für die Hydraulikflüssigkeit bildet, ist es sogar möglich, eine hydraulische Verbindung zu einem Raum herzustellen, der axial hinter der Turbinenradnabe angeordnet ist.

Zum Bilden der Durchtrittsöffnung ist es beispielsweise möglich, dass mindestens eine der Zahnaufnahmen einen Zahn aufnimmt, der tangential beidseitig an den Seiten der Zahnaufnahme anliegt und radial vor Erreichen des Bodens der Zahnaufnahme endet. Alternativ oder zusätzlich kann mindestens eine der Zahnaufnahmen zahnlos sein.

Das Verbinden des Axialkanals mit einem Raum, der hinter der Turbinenradnabe angeordnet ist, ist insbesondere dann von Vorteil, wenn der Axialkanal über die mindestens eine Durchtrittsöffnung mit einem Kolbenraum verbunden ist, der Kolbenraum einseitig von einem Kolben abgeschlossen ist und mittels des Kolbens eine Überbrückungskupplung betätigbar ist, mittels derer das Turbinenrad mit dem Pumpenrad drehfest verbindbar ist.

Wenn die Wellenhülse axial zwischen dem Anfangs- und dem Endbereich einen Mittelbereich aufweist, der in einem Kontaktteil seines Innenumfangs am Wellenkem anliegt und in einem Strömungsteil seines Innenumfangs vom Wellenkern beabstandet ist, ist die Getriebeeingangswelle besonders stabil aufgebaut. Dabei kann alternativ der Wellen kern im wesentlichen rotationssymmetrisch ausgebildet sein und, die Wellenhülse im Mittelbereich Innenvorsprünge aufweisen oder die Wellenhülse im wesentlichen rotationssymmetrisch ausgebildet sein und der Wellenkern im Mittelbereich Außenvorsprünge aufweisen.

Wenn der Anfangsbereich in Axialrichtung flüssigkeitsdicht abgeschlossen ist, ist eine radiale Speisung der Hydraulikflüssigkeit besonders wirksam. Die radiale Speisung kann beispielsweise dadurch erreicht werden, dass der Anfangsbereich radial von einer Büchse flüssigkeitsdicht umgeben ist, die Büchse relativ zur Getriebeeingangswelle drehbar ist, die Büchse und die Getriebeeingangswelle einen mit dem Anfangsbereich verbundenen Ringkanal bilden und die Büchse eine Speiseöffnung für die Hydraulikflüssigkeit aufweist.

Es ist möglich, den erfindungsgemäßen Axialkanal zusätzlich zu einer konventionellen Ausgestaltung der Getriebeeingangswelle, also zusätzlich zu einer Mittenbohrung mit Radialbohrungen, einzusetzen. Vorzugsweise aber ersetzt die Ausgestaltung von Wellenkern und Weffenhülse die Bohrungen des Standes der Technik. Es ist also sogar möglich, dass die Getriebeeingangswelle bohrungsfrei ausgebildet ist.

Weitere Vorteile und Einzelheiten ergeben sich aus der nachfolgenden Beschreibung eines Ausführungsbeispiels. Dabei zeigen in Prinzipdarstellung
- Figur 1: einen Schnitt durch einen Drehmomentwandler und
- Figuren 2 - 4: Details von Figur 1.

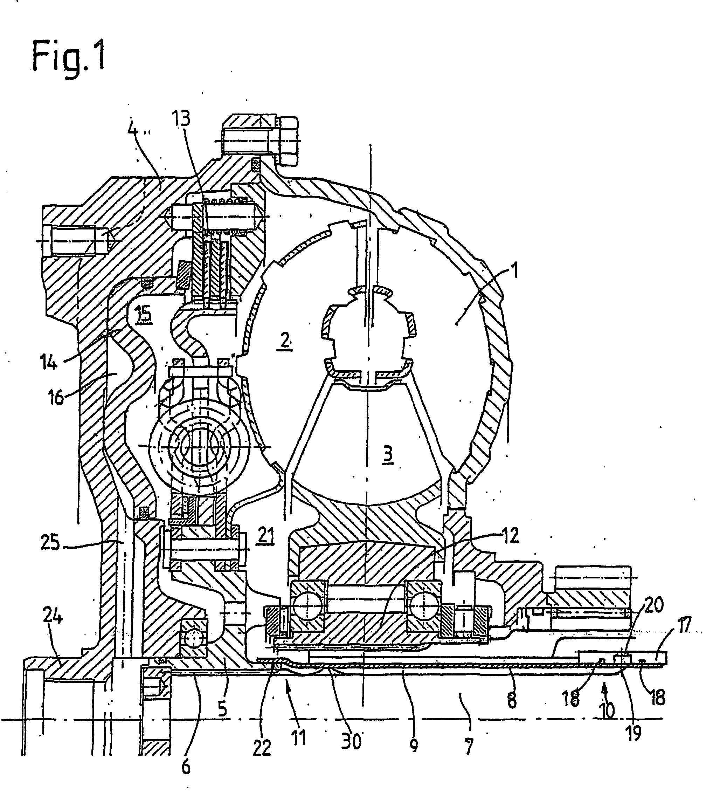

Gemäß Figur 1 weist ein Drehmomentwandler ein Pumpenrad 1, ein Turbinenrad 2 und ein Leitrad 3 auf. Das Pumpenrad 1 ist mit einer Gehäuseschale 4 drehfest verbunden, in der Regel verschweißt oder - wie hier - verschraubt. Über die Gehäuseschale 4 ist das Pumpenrad 1 mit einer - der Übersichtlichkeit halber nicht dargestellten - Ausgangswelle eines Motors starr gekuppelt. Das Turbinenrad 2 ist vom Pumpenrad 1 antreibbar. Es weist eine Turbinenradnabe 5 auf.

Die Turbinenradnabe 5 ist über eine Verzahnung 6 mit einem Wellenkern 7 drehfest verbunden. Auf den Wellenkem 7 ist eine Wellenhülse 8 aufgeschoben, die den Wellenkern 7 umgibt. Der Wellenkem 7 und die Wellenhülse 8 sind drehfest miteinander verbunden und bilden zusammen eine Getriebeeingangswelle 7, 8.

Die Getriebeeingangswelle 7, 8 bildet einen Axialkanal 9 für eine Hydraulikflüssigkeit. Der Axialkanal 9 wird dabei dadurch gebildet, dass der Wellenkern 7 und die Wellenhülse 8 derart aufeinander abgestimmt sind, dass der Wellenkern 7 in der Wellenhülse 8 radial spielfrei geführt ist und der Wellenkern 7 und die Wellenhülse 8 zwischen sich den Axialkanal 9 bilden. Der Axialkanal 9 weist einen Anfangsbereich 10 und einen Endbereich 11 auf.

Das Leitrad 3 ist, wie allgemein üblich, auf einer Leitradbuchse 12 angeordnet.
Die Leitradbuchse 12 ist bezüglich des Drehmomentwandlers ortsfest.

Der Drehmomentwandler weist ferner eine Überbrückungskupplung 13 auf. Mittels der Überbrückungskupplung 13 ist das Turbinenrad 2 mit dem Pumpenrad 1 drehfest verbindbar bzw. starr kuppelbar. Die Überbrückungskupplung 13 ist mittels eines Kolbens 14 betätigbar. Der Kolben 14 schließt zusammen mit dem Turbinenrad 2 bzw. der Gehäuseschale 4 einen turbinenradseitigen Kolbenraum 15 bzw. einen gehäuseschalenseitigen Kolbenraum 16 ab. Der Kolben 14 bildet dabei jeweils eine Seite der Kolbenräume 15, 16.

Der Anfangsbereich 10 ist in Axialrichtung flüssigkeitsdicht abgeschlossen. Der flüssigkeitsdichte Abschluss kann beispielsweise dadurch erreicht werden, dass der Wellenkem 7 sich im Anfangsbereich 10 verbreitert. Gegebenenfalls kann zusätzlich eine Abdichtung vorgesehen sein. Diese ist der Übersichtlichkeit halber in den Figuren nicht dargestellt.

Zum Ein- bzw. Ausspeisen der Hydraulikflüssigkeit ist der Anfangsbereich 10 radial von einer Büchse 17 flüssigkeitsdicht umgeben. Der flüssigkeitsdichte Abschluss wird dabei durch Abdichtungen 18 erzielt. Die Büchse 17 ist ortsfest angeordnet. Sie dreht sich daher nicht mit der Getriebeeingangswelle 7, 8 mit. Sie ist also relativ zur Getriebeeingangswelle 7, 8 drehbar. Die Büchse 17 und die Getriebeeingangswelle 7, 8 bilden einen Ringkanal 19, der mit dem Anfangsbereich 10 verbunden ist. Die Büchse 17 weist femer eine Speiseöffnung 20 für die Hydraulikflüssigkeit auf.

Der Axialkanal 9 kann prinzipiell eine beliebige Länge aufweisen. Es ist beispielsweise möglich, dass er sich in Axialrichtung über die Leitradbuchse 12 hinaus erstreckt. Mit anderen Worten: Es kann sein, dass die Leitradbuchse 12 axial zwischen dem Anfangsbereich 10 und dem Endbereich 11 angeordnet ist. Bei einer derartigen Ausgestaltung wäre es beispielsweise möglich, die Speiseöffnung 20 mit einem Raum 21 zu verbinden, der zwischen der Leitradbuchse 12 und der Turbinenradnabe 5 angeordnet ist.

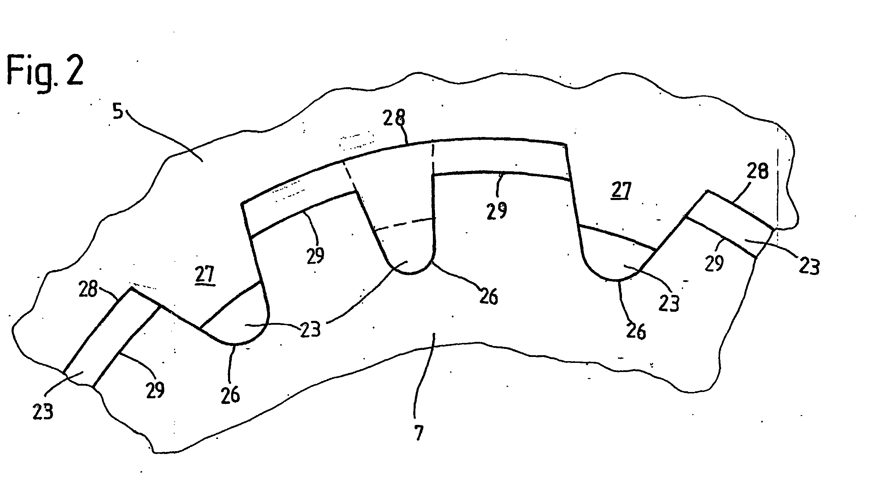

Gemäß Figur 1 erstreckt sich der Axialkanal 9 aber sogar bis zur Turbinenradnabe 5. Ohne weiteren Maßnahmen wäre es in diesem Fall beispielsweise möglich, die Speiseöffnung 20 mit dem turbinenradschalenseitigen Kolbenraum 15 zu verbinden. Gemäß Figur 1 aber ist der Endbereich 11 gegenüber der Turbinenradnabe 5 mittels einer Abdichtung 22 flüssigkeitsdicht abgedichtet. Die Verzahnung 6 hingegen ist - siehe Figur 2 - derart ausgebildet, dass sie mindestens eine Durchtrittsöffnung 23 für die Hydraulikflüssigkeit bildet. Dadurch ist es möglich, die Speiseöffnung 20 über den Axialkanal 9 mit einem Raum nahe des Lagerzapfens 24 zu verbinden. Der Raum im Bereich des Lagerzapfens 24 steht über,Radialkanäle 25 dann mit dem gehäuseschalenseitigen Kolbenraum 16 in Verbindung.

Gemäß Figur 2 weist der Wellenkern 7 Zahnaufnahmen 26 auf, die mit Zähnen 27 der Turbinenradnabe 5 zusammenwirken. Die Zahnaufnahmen 26 und die Zähne 27 bilden zusammen die Verzahnung zwischen Turbinenradnabe 5 und Wellenkern 7, mittels derer das Turbinenrad 2 mit dem Wellenkem 7 drehfest verbunden ist. Ersichtlich sind die Zähne 27 mit den Zahnaufnahmen 26 verkeilt. Die Zähne 27 liegen also tangential beidseitig an den Seiten der Zahnaufnahmen 26 an, von denen sie aufgenommen sind. Radial hingegen enden die Zähne 27 vor Erreichen des Bodens der jeweiligen Zahnaufnahme 26. Bereits hierdurch werden die Durchtrittsöffnungen 23 gebildet. Darüber hinaus ist die Innenseite 28 der Turbinenradnabe 5 von der Außenseite 29 des Wellenkerns 7 beabstandet. Auch hierdurch werden Durchtrittsöffnungen 23 gebildet.

In der Regel werden die so gebildeten Durchtrittsöffnungen 23 ausreichen, um einen hinreichenden Fluss der Hydraulikflüssigkeit zu gewährleisten. Falls ein noch stärkerer Durchfluss erreicht werden soll, ist es aber auch möglich, einzelne Zähne ganz auszulassen. in diesem Fall ist mindestens eine der Zahnaufnahmen 26 zahnlos. Dies ist in Figur 2 durch den nur gestrichelt angedeuteten, ausgelassenen Zahn dargestellt.

Prinzipiell ist es ausreichend, die Wellenhülse 8 nur im Anfangsbereich 10 und im Endbereich 11 am Wellenkern 7 anzulagern. In einem Mittelbereich 30 kann die Wellenhülse 8 vom Wellenkern 7 beabstandet sein. Vorzugsweise aber liegt die Wellenhülse 8 im Mittelbereich 30 in einem Kontaktbereich 31 ihres Innenumfangs am Wellenkern 7 an. Nur in einem Strömungsteil 32 ihres Innenumfangs ist sie vom Wellenkern 7 beabstandet.

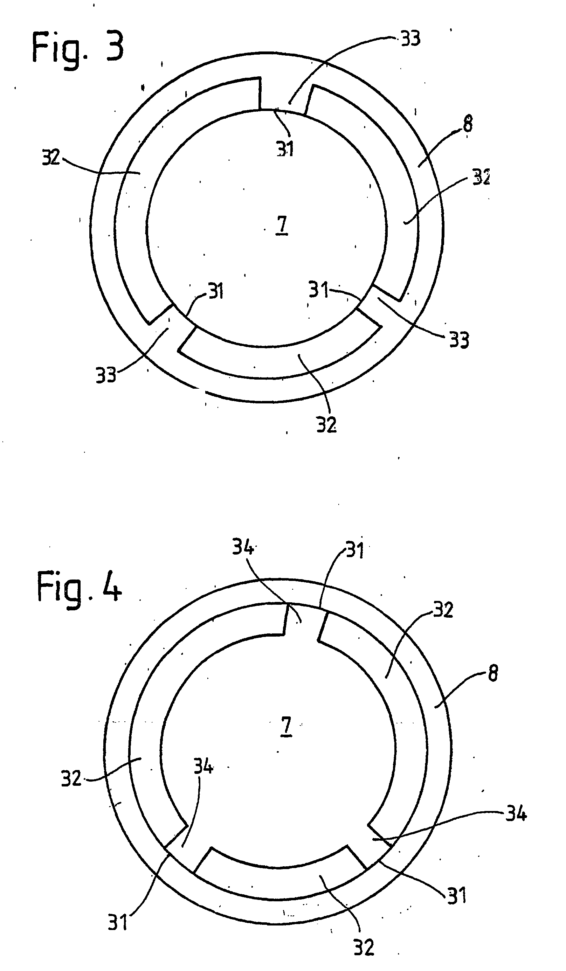

Gemäß Figur 3 ist hierzu vorgesehen, dass der Wellenkern 7 im Mittelbereich 30 im wesentlich rotationssymmetrisch ausgebildet ist und die Wellenhülse 8 im Mittelbereich 30 Innenvorsprünge 33 aufweist. Alternativ ist es gemäß Figur 4 aber auch möglich, dass die Wellenhülse 8 im Mittelbereich 30 im wesentlichen rotationssymmetrisch ausgebildet ist und der Wellenkern 7 im Mittelbereich 30 Außenvorsprünge 34 aufweist.

Mittels der erfindungsgemäßen Ausgestaltung der Getriebeeingangswelle 7, 8 ist es möglich, sowohl von der Mittenbohrung als auch von den Radialbohrungen des Standes der Technik abzusehen. Es ist also möglich, die Getriebeeingangswelle 7, 8 völlig bohrungsfrei auszubilden. Es ist aber auch möglich, den erfindungsgemäßen Axialkanal 9 zusätzlich zu einer Mittenbohrung gemäss dem Stand der Technik vorzusehen.

### [Bezugszeichenliste]

- 1: Pumpenrad
- 2: Turbinenrad
- 3: Leitrad
- 4: Gehäuseschale
- 5: Turbinenradnabe
- 6: Verzahnung
- 7: Wellenkern
- 8: Wellenhülse
- 9: Axialkanal
- 10: Anfangsbereich
- 11: Endbereich
- 12: Leitradbuchse
- 13: Überbrückungskupplung
- 14: Kolben
- 15, 16: Kolbenräume
- 17: Büchse
- 18,22: Abdichtungen
- 19: Ringkanal
- 20: Speiseöffnung
- 21: Raum
- 23: Durchtrittsöffnung
- 24: Lagerzapfen
- 25: Radialkanäle
- 26: Zahnaufnahmen
- 27: Zähne
- 28: Innenseite
- 29: Außenseite
- 30: Mittelbereich
- 31: Kontaktbereich
- 32: Strömungsbereich
- 33: Innenvorsprünge
- 34: Außenvorsprünge

## Patentansprüche

1. Drehmomentwandler mit einem Pumpenrad (1), einem vom Pumpenrad (1) antreibbaren Turbinenrad (2) und einem Leitrad (3),
- wobei das Turbinenrad (2) mit einer Getriebeeingangswelle (7, 8) drehfest verbunden ist,
- wobei die Getriebeeingangswelle (7, 8) einen Axialkanal (9) mit einem Anfangs- (10) und einem Endbereich (11) für eine Hydraulikflüssigkeit bildet,
**dadurch gekennzeichnet,**
- **dass** die Getriebeeingangswelle (7, 8) einen Wellenkem (7) und eine den Wellenkern (7) umgebende Wellenhülse (8) aufweist und
- **dass** der Wellenkern (7) und die Wellenhülse (8) drehfest miteinander verbunden und derart aufeinander abgestimmt sind, dass der Wellenkern (7) in der Wellenhülse (8) radial spielfrei geführt ist und der Wellenkem (7) und die Wellenhülse (8) zwischen sich den Axialkanal (9) bilden.

2. Drehmomentwandler nach Anspruch 1,
**dadurch gekennzeichnet,**
**dass** das Leitrad (3) auf einer Leitradbuchse (12) angeordnet ist und
**dass** die Leitradbuchse (12) axial zwischen dem Anfangs- (10) und dem Endbereich (11) angeordnet ist.

3. Drehmomentwandler nach Anspruch 2,
**dadurch gekennzeichnet,**
**dass** das Turbinenrad (2) eine Turbinenradnabe (5) aufweist, die über eine Verzahnung (6) mit zusammenwirkenden Zähnen (27) und Zahnaufnahmen (26) mit dem Wellenkem (7) drehfest verbunden ist, dass der Endbereich (11) sich bis zur Turbinenradnabe (5) erstreckt und gegenüber dieser flüssigkeitsdicht abgedichtet ist und dass die Verzahnung (6) derart ausgebildet ist, dass sie mindestens eine Durchtrittsöffnung (23) für die Hydraulikflüssigkeit bildet.

4. Drehmomentwandler nach Anspruch 3,
**dadurch gekennzeichnet,**
**dass** mindestens eine der Zahnaufnahmen (26) einen Zahn (27) aufnimmt, dass der Zahn (27) tangential beidseitig an den Seiten der Zahnaufnahme (26) anliegt und dass der Zahn (27) radial vor Erreichen des Bodens der Zahnaufnahme (26) endet.

5. Drehmomentwandler nach Anspruch 3 oder 4,
**dadurch gekennzeichnet,**
**dass** mindestens eine der Zahnaufnahmen (26) zahnlos ist.

6. Drehmomentwandler nach Anspruch 3,4 oder 5,
**dadurch gekennzeichnet,**
**dass** der Axialkanal (9) über die mindestens eine Durchtrittsöffnung (23) mit einem Kolbenraum (16) verbunden ist, dass der Kolbenraum (16) einseitig von einem Kolben (14) abgeschlossen ist und dass mittels des Kolbens (14) eine Überbrückungskupplung (13) betätigbar ist, mittels derer das Turbinenrad (2) mit dem Pumpenrad (1) drehfest verbindbar ist.

7. Drehmomentwandler nach einem der obigen Ansprüche,
**dadurch gekennzeichnet,**
**dass** die Wellenhülse (8) axial zwischen dem Anfangs- (10) und dem Endbereich (11) einen Mittelbereich (30) aufweist, der in einem Kontaktteil (31) seines Innenumfangs am Wellenkern (7) anliegt und in einem Strömungsteil (32) seines Innenumfangs vom Wellenkem (7) beabstandet ist.

8. Drehmomentwandler nach Anspruch 7,
**dadurch gekennzeichnet,**
**dass** der Wellenkem (7) im wesentlichen rotationssymmetrisch ausgebildet ist und dass die Wellenhülse (8) im Mittelbereich (30) Innenvorsprünge (33) aufweist.

9. Drehmomentwandier nach Anspruch 7,
**dadurch gekennzeichnet ,**
**dass** die Wellenhülse (8) im wesentlichen rotationssymmetrisch ausgebildet ist und dass der Wellenkern (7) im Mitte(bereich (30) Außenvorsprünge (34) aufweist.

10. Drehmomentwandler nach einem der obigen Ansprüche,
**dadurch gekennzeichnet,**
**dass** der Anfangsbereich (10) in Axialrichtung flüssigkeitsdicht abgeschlossen ist.

11. Drehmomentwandler nach Anspruch 10,
**dadurch gekennzeichnet,**
**dass** der Anfangsbereich (10) radial von einer Büchse (17) flüssigkeitsdicht umgeben ist, dass die Büchse (17) relativ zur Getriebeeingangswelle (7, 8) drehbar ist, dass die Büchse (17) und die Getriebeeingangswelle (7, 8) einen mit dem Anfangsbereich (10) verbundenen Ringkanal (19) bilden und dass die Büchse (17) eine Speiseöffnung (20) für die Hydraulikflüssigkeit aufweist.

12. Drehmomentwandler nach einem der obigen Ansprüche,
**dadurch gekennzeichnet,**
**dass** die Getriebeeingangswelle (7, 8) bohrungsfrei ausgebildet ist.

## Claims

1. Torque converter comprising a pump rotor (1), a turbine rotor (2) that can be driven by the pump rotor (1) and a stator (3),
- the turbine rotor (2) being firmly connected to a transmission input shaft (7, 8) so as to rotate with it,
- the transmission input shaft (7, 8) forming an axial duct (9) with an initial region (10) and a final region (11) for a hydraulic fluid,
**characterized**
- **in that** the transmission input shaft (7, 8) has a shaft core (7) and a shaft sleeve (8) surrounding the shaft core (7), and
- **in that** the shaft core (7) and the shaft sleeve (8) are firmly connected to each other so as to rotate with each other and are matched to each other in such a way that the shaft core (7) is guided radially without play in the shaft sleeve (8), and the shaft core (7) and the shaft sleeve (8) form the axial duct (9) between them.

2. Torque converter according to Claim 1, **characterized in that** the stator (3) is arranged on a stator bush (12), and **in that** the stator bush (12) is arranged axially between the initial region (10) and the final region (11).

3. Torque converter according to Claim 2, **characterized in that** the turbine rotor (2) has a turbine rotor hub (5) which is firmly connected to the shaft core (7) so as to rotate with it via toothing (6) with interacting teeth (27) and tooth receptacles (26), **in that** the final region (11) extends as far as the turbine rotor hub (5) and is sealed off in a liquid-tight manner with respect to the latter, and **in that** the toothing (6) is formed in such a way that it forms at least one passage opening (23) for the hydraulic fluid.

4. Torque converter according to Claim 3, **characterized in that** at least one of the tooth receptacles (26) accommodates a tooth (27), **in that** the tooth (27) bears tangentially on both sides of the tooth receptacle (26), and **in that** the tooth (27) ends radially before reaching the bottom of the tooth receptacle (26).

5. Torque converter according to Claim 3 or 4, **characterized in that** at least one of the tooth receptacles (26) has no tooth.

6. Torque converter according to Claim 3, 4 or 5, **characterized in that** the axial duct (9) is connected via the at least one passage opening (23) to a piston chamber (16), **in that** the piston chamber (16) is closed off on one side by a piston (14), and **in that**, by means of the piston (14), a bridging clutch (13) can be actuated, by means of which the turbine rotor (2) can be firmly connected to the pump rotor (1) so as to rotate with it.

7. Torque converter according to one of the above claims, **characterized in that**, axially between the initial region (10) and the final region (11), the shaft sleeve (8) has a central region (30) which, in a contact part (31) of its inner circumference, bears on the shaft core (7) and, in a flow part (32) of its inner circumference, is at a distance from the shaft core (7).

8. Torque converter according to Claim 7, **characterized in that** the shaft core (7) is of substantially rotationally symmetrical design, and **in that** the shaft sleeve (8) has internal projections (33) in the central region (30).

9. Torque converter according to Claim 7, **characterized in that** the shaft sleeve (8) is of substantially rotationally symmetrical design, and **in that** the shaft core (7) has external projections (34) in the central region (30).

10. Torque converter according to one of the above claims, **characterized in that** the initial region (10) is sealed off in a liquid-tight manner in the axial direction.

11. Torque converter according to Claim 10, **characterized in that** the initial region (10) is surrounded radially in a liquid-tight manner by a casing (17), **in that** the casing (17) can be rotated relative to the transmission input shaft (7, 8), **in that** the casing (17) and the transmission input shaft (7, 8) form an annular duct (19) connected to the initial region (10), and **in that** the casing (17) has a feed opening (20) for the hydraulic fluid.

12. Torque converter according to one of the above claims, **characterized in that** the transmission input shaft (7, 8) is constructed without bores.

## Revendications

1. Convertisseur de couple avec une roue de pompe (1), une roue de turbine (2) pouvant être entraînée par la roue de pompe (1) et un stator (3), la roue de turbine (2) étant reliée de manière solidaire en rotation à un arbre d'entrée de boîte de vitesse (7,8) et l'arbre d'entrée de boîte de vitesse (7,8) formant, avec une zone de début (10) et une zone de fin (11), un canal axial (9) pour un fluide hydraulique, **caractérisé en ce que**
- l'arbre d'entrée de boîte de vitesse (7,8) présente un noyau d'arbre (7) et un manchon d'arbre (8) entourant le noyau d'arbre (7) et **en ce que**
- le noyau d'arbre (7) et le manchon d'arbre (8) sont reliés ensemble de manière solidaire en rotation et adaptés l'un à l'autre de telle sorte que le noyau d'arbre (7) est guidé radialement sans jeu dans le manchon d'arbre (8) et que le noyau d'arbre (7) et le manchon d'arbre (8) forment entre eux le canal axial (9).

2. Convertisseur de couple selon la revendication 1, **caractérisé en ce que** le stator (3) est disposé sur une douille de stator (12) et **en ce que** la douille de stator (12) est disposée axialement entre la zone de début (10) et la zone de fin (11).

3. Convertisseur de couple selon la revendication 2, **caractérisé en ce que** la roue de turbine (2) présente un moyeu de roue de turbine (5) qui est relié de manière solidaire en rotation avec le noyau d'arbre (7) via une denture (6) avec des dents (27) et des creux de dents (26) travaillant conjointement, **en ce que** la zone de fin (11) s'étend jusqu'au moyeu de roue de turbine (5) et est rendue étanche au fluide par rapport à ce dernier, et **en ce que** la denture (6) est réalisée de manière telle qu'elle forme au moins une ouverture de passage (23) pour le fluide hydraulique.

4. Convertisseur de couple selon la revendication 3, **caractérisé en ce qu'**au moins un des creux de dents (26) accueille une dent (27), **en ce que** la dent (27) touche tangentiellement les deux côtés du creux de dent (26) et **en ce que** la dent (27) se termine radialement avant d'atteindre le fond du creux de dent (26).

5. Convertisseur de couple selon la revendication 3 ou 4, **caractérisé en ce qu'**au moins un des creux de dents (26) est libre de toute dent.

6. Convertisseur de couple selon la revendication 3, 4 ou 5, **caractérisé en ce que** le canal axial (9) est relié à une chambre de piston (16) via au moins une ouverture de passage (23), **en ce que** la chambre du piston (16) se termine d'un côté par un piston (14) et **en ce qu'**un embrayage de prise directe (13) peut être actionné au moyen du piston (14) et qu'il peut relier de manière solidaire en rotation la roue de turbine (2) à la roue de pompe (1).

7. Convertisseur de couple selon l'une quelconque des revendications précédentes, **caractérisé en ce que** le manchon d'arbre (8) présente, axialement entre la zone de début (10) et la zone de fin (11), une zone centrale (30) qui touche le noyau d'arbre (7) dans une portion (31) de son périmètre intérieur servant au contact et est écartée du noyau d'arbre (7) dans une portion (32) de son périmètre intérieur servant à l'écoulement.

8. Convertisseur de couple selon la revendication 7, **caractérisé en ce que** le noyau d'arbre (7) est essentiellement réalisé de façon symétrique en rotation et **en ce que** le manchon d'arbre (8) présente des saillies intérieures (33) dans la zone centrale (30).

9. Convertisseur de couple selon la revendication 7, **caractérisé en ce que** le manchon d'arbre (8) est essentiellement réalisé de façon symétrique en rotation et **en ce que** le noyau d'arbre (7) présente des saillies extérieures (34) dans la zone centrale (30).

10. Convertisseur de couple selon l'une quelconque des revendications précédentes, **caractérisé en ce que** la zone de début (10) est fermée de manière étanche au fluide dans le sens axial.

11. Convertisseur de couple selon la revendication 10, **caractérisé en ce que** la zone de début (10) est entourée radialement par une douille (17) de manière étanche au fluide, **en ce que** la douille (17) peut tourner relativement à l'arbre d'entrée de boîte de vitesse (7,8), **en ce que** la douille (17) et l'arbre d'entrée de boîte de vitesse (7,8) forment un canal annulaire (19) relié à la zone de début (10) et **en ce que** la douille (17) présente une ouverture d'alimentation (20) pour le fluide hydraulique.

12. Convertisseur de couple selon l'une quelconque des revendications précédentes, **caractérisé en ce que** l'arbre d'entrée de boîte de vitesse (7,8) est réalisé sans aucun perçage.
